# FASCICULE DE BREVET EUROPEEN

(11) **EP 2 845 944 B1**
(45) Date de publication et mention de la délivrance du brevet: **17.02.2016**
(21) Numéro de dépôt: 14183327.7
(22) Date de dépôt: 03.09.2014
(51) Int. Cl.: D06F 75/10

(54) **Appareil électroménager de repassage comportant un filtre destiné à retenir des particules de tartre transportées par la vapeur**
Elektrohaushaltsgerät zum Bügeln, das einen Filter zum Zurückhalten der mit dem Dampf transportierten Kalkpartikel umfasst
Ironing electrical appliance comprising a filter for retaining scale particles carried by the steam

(30) Priorité: 10.09.2013 FR 1358697
(43) Date de publication de la demande: 11.03.2015
(73) Titulaire: SEB S.A., 69130 Ecully (FR)
(72) Inventeur: Collet, Frédéric, 38200 Vienne (FR)
(74) Mandataire: Bourrières, Patrice

(56) Documents cités:
- EP-A1- 2 584 089
- EP-A2- 2 584 090
- DE-A1- 3 729 800
- FR-A1- 2 979 924

## Description

La présente invention concerne un appareil de repassage comportant une chambre de vaporisation instantanée reliée à des trous de sortie de vapeur par un circuit de distribution de vapeur comprenant un filtre destiné à retenir au moins une partie des particules de tartre transportées par le flux de vapeur.

Il est connu, de la demande de brevet FR 2 979 924 déposée par la demanderesse, un fer à repasser comprenant un circuit de distribution de vapeur reliant une chambre de vaporisation instantanée à des trous de sortie de vapeur ménagés dans la semelle du fer à repasser. Dans ce document, le circuit de distribution de vapeur comporte un filtre destiné à retenir les particules de tartre transportées par le flux de vapeur à la sortie de la chambre de vaporisation. EP 2 584 089 décrit un fer à repasser ayant un orifice de détartrage fermé par un bouchon amovible accessible depuis l'extérieur du fer.

Un tel fer à repasser présente l'avantage de retenir, en amont du filtre, les plus grosses particules de tartre évitant que ces dernières ne soient émises par les trous de sortie de vapeur de la semelle et ne viennent tacher le linge.

Cependant, un tel fer à repasser présente l'inconvénient d'avoir des performances, et notamment un débit de vapeur à la sortie de la semelle, pouvant diminuer dans le temps du fait du colmatage progressif du filtre et de l'entartrage de la chambre de vaporisation. Ce colmatage est d'autant plus rapide que le degré de filtration est important, c'est-à-dire que le filtre permet la rétention des particules de tartre les plus petites.

Aussi un but de la présente invention est de proposer un appareil de repassage remédiant à ces inconvénients.

A cet effet, l'invention se rapporte à un appareil de repassage comportant un générateur de vapeur relié à des trous de sortie de vapeur par un circuit de distribution de vapeur comprenant au moins un filtre destiné à retenir des particules de tartre transportées par le flux de vapeur, le circuit de distribution de vapeur comportant une cavité de récupération du tartre comprenant un orifice d'évacuation du tartre fermé par un bouchon amovible accessible depuis l'extérieur de l'appareil, le filtre étant amovible de l'appareil par l'orifice d'évacuation du tartre.

L'appareil ainsi réalisé présente l'avantage de posséder un orifice d'évacuation du tartre permettant à la fois l'évacuation des particules de tartre présentes dans le circuit de distribution de vapeur et le retrait du filtre pour son inspection et son éventuel nettoyage.

Selon une autre caractéristique de l'invention, le filtre est solidaire du bouchon.

Une telle caractéristique permet d'avoir un filtre qui est extrait automatiquement de l'appareil lors du retrait du bouchon, permettant une inspection systématique de l'état du filtre par l'utilisateur lorsqu'une opération de nettoyage est effectuée.

Une telle caractéristique permet également de réduire le nombre de manipulations que doit effectuer l'utilisateur pour accéder au filtre et d'éviter ainsi que l'utilisateur oublie de remettre le filtre après son nettoyage.

Selon une autre caractéristique de l'invention, le filtre est constitué par une grille avec des ouvertures inférieures à 0,4 mm de côté.

Une telle caractéristique permet de ne laisser passer que des particules de tartre sensiblement invisibles vers les trous de sortie de vapeur.

Selon une autre caractéristique de l'invention, le flux de vapeur cheminant dans le circuit de distribution de vapeur s'écoule de bas en haut au travers du filtre, la cavité de récupération du tartre étant disposée juste en amont du filtre.

Une telle caractéristique présente l'avantage de bloquer les particules contre la face inférieure du filtre de sorte que ces particules se détachent par gravité du filtre lors de l'arrêt du flux de vapeur et tombent dans la cavité de récupération du tartre.

Selon une autre caractéristique de l'invention, le filtre est disposé dans une partie du circuit de distribution de vapeur au niveau de laquelle le flux de vapeur effectue un virage d'au moins 90°.

Une telle caractéristique présente l'avantage de limiter la vitesse d'encrassement du filtre, les particules les plus lourdes étant entrainées, de part leur inertie, en dehors du filtre, dans une zone de stockage.

Selon une autre caractéristique de l'invention, le filtre présente une forme bombée.

Une telle caractéristique présente l'avantage d'engendrer un glissement des gouttelettes d'eau le long de la forme bombée du filtre, cet écoulement des gouttelettes d'eau présentant l'avantage d'emporter une partie des particules de tartre accrochées au filtre, participant ainsi à son nettoyage.

Selon une autre caractéristique de l'invention, le filtre comporte un récipient s'introduisant dans la cavité de récupération du tartre par l'orifice d'évacuation du tartre.

Une telle caractéristique présente l'avantage de permettre l'évacuation du tartre en retirant simplement le récipient récupérateur de tartre.

Selon une autre caractéristique de l'invention, le récipient récupérateur de tartre présente une extrémité avant ouverte par laquelle pénètre le flux de vapeur et une extrémité postérieure fermée, le récipient comportant une fenêtre latérale par laquelle le flux de vapeur s'échappe en direction des trous de sortie de vapeur, le filtre s'étendant au travers de la fenêtre.

Une telle caractéristique permet de bénéficier de l'effet d'entrainement du flux de vapeur traversant le récipient pour augmenter la quantité de tartre récupérée dans le récipient, les particules étant piégées à l'intérieur du récipient récupérateur de tartre par le filtre.

Selon une autre caractéristique de l'invention, le récipient récupérateur de tartre supporte un joint d'étanchéité venant au contact de la cavité de récupération du tartre, de part et d'autre de la fenêtre.

Selon une autre caractéristique de l'invention, la fenêtre est orientée vers le haut lorsque le récipient récupérateur de tartre est disposé dans la cavité de récupération du tartre et que l'appareil occupe une position de fonctionnement normale, le récipient récupérateur de tartre comportant sur la paroi opposée à la fenêtre, une cuillère comprenant une partie creuse.

Selon une autre caractéristique de l'invention, le récipient récupérateur de tartre comporte au moins une partie, s'étendant derrière le filtre, définissant un volume de stockage.

Une telle caractéristique présente l'avantage de permettre le stockage des particules de tartre dans une zone se trouvant à l'écart du filtre lorsque l'appareil est disposé de telle sorte que le récipient est orienté sensiblement verticalement avec l'extrémité postérieure fermée vers le bas.

De manière avantageuse, le volume de stockage du récipient récupérateur de tartre est supérieur à 4 cm³.

Une telle caractéristique permet de recueillir les particules de tartre accumulées entre deux entretiens, ainsi que l'eau non vaporisée dans la chambre de vaporisation, sans venir souiller le filtre.

Selon une autre caractéristique de l'invention, le générateur de vapeur est une chambre de vaporisation instantanée.

Une telle caractéristique présente l'avantage d'offrir une construction simple pour produire de la vapeur.

Selon encore une autre caractéristique de l'invention, les trous de sortie de vapeur sont ménagés dans une semelle de repassage d'un fer à repasser comportant un talon sur lequel il peut reposer lors des phases inactives de repassage.

Selon une autre caractéristique de l'invention, la chambre de vaporisation instantanée est reliée à la cavité de récupération du tartre par une ouverture ménagée au niveau de l'extrémité arrière de la chambre de vaporisation, le flux de vapeur produit par la chambre de vaporisation s'échappant au travers du circuit de distribution de vapeur par l'ouverture ménagée à l'arrière de la chambre de vaporisation.

Selon une autre caractéristique de l'invention, l'orifice d'évacuation du tartre débouche au niveau du talon du fer à repasser.

Une telle caractéristique présente l'avantage d'offrir un excellent accès à l'orifice d'évacuation du tartre lorsque le fer à repasser repose sur sa semelle.

Selon une autre caractéristique de l'invention, la cavité de récupération du tartre se trouve en porte à faux derrière la semelle lorsque le fer à repasser repose sur sa semelle,

Une telle caractéristique permet d'éloigner la cavité de récupération du tartre de la semelle et donc de limiter le risque de brulure lors de la manipulation du bouchon.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un fer à repasser selon un mode particulier de réalisation de l'invention ;
- la figure 2 est une vue en coupe longitudinal du corps chauffant et de la semelle équipant le fer à repasser de la figure 1 ;
- la figure 3 est une vue en perspective du corps chauffant de la figure 2 démuni de son couvercle de fermeture ;
- la figure 4 est une vue de dessus du corps chauffant de la figure 2 ;
- les figures 5 et 6 sont des vues en perspective, partiellement arrachée, du corps chauffant de la figure 2 respectivement avec et sans le récipient récupérateur de tartre ;
- la figure 7 est une vue en perspective du récipient récupérateur de tartre fixé sur le bouchon équipant le fer à repasser de la figure 1.

Seuls les éléments nécessaires à la compréhension de l'invention ont été représentés. Pour faciliter la lecture des dessins les mêmes éléments portent les mêmes références d'une figure à l'autre.

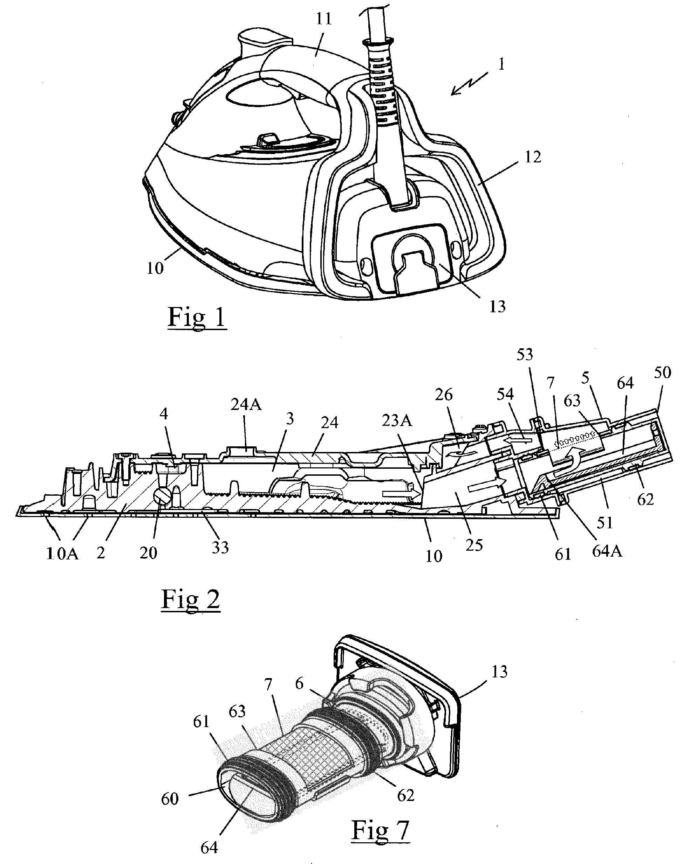

La figure 1 illustre un fer à repasser 1 à vapeur comportant une semelle 10 de repassage munie d'un ensemble de trous de sortie de vapeur 10A, visibles seulement sur la figure 2, la semelle 10 étant surmontée d'un boitier en matière plastique comprenant une poignée de préhension 11 à son extrémité supérieure et un talon 12 dans sa partie arrière sur lequel le fer à repasser peut reposer sensiblement verticalement lors des phases inactives de repassage.

Le talon 12 comporte deux bras délimitant entre eux un espace recevant un bouchon 13 amovible donnant accès à un orifice d'évacuation du tartre 50, visible sur la figure 2, le bouchon 13 étant fixé sur une surface postérieure du boitier par une fixation de type baïonnette semblable à celle décrite plus en détails dans la demande de brevet FR 2 981 371 déposée par la demanderesse, la surface postérieure du boitier étant légèrement inclinée vers l'avant pour offrir un accès plus aisé lorsque le fer à repasser repose horizontalement sur sa semelle 10.

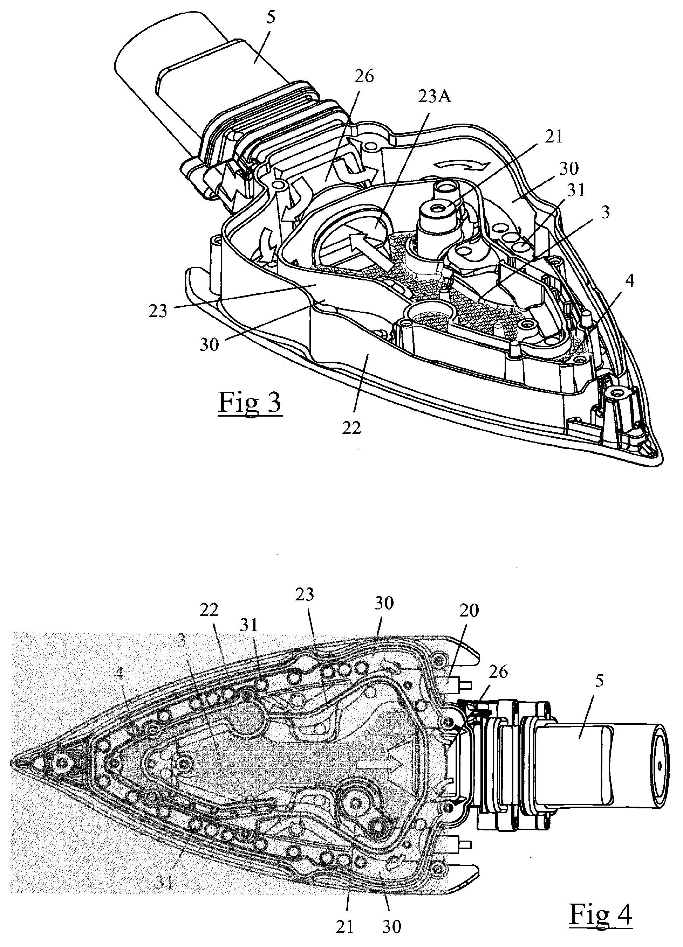

Conformément aux figures 2 à 4, la semelle 10 du fer à repasser est liée thermiquement et mécaniquement à un corps chauffant 2 intégré dans la partie basse du boitier, le corps chauffant 2 comportant une fonderie en aluminium comprenant classiquement un élément résistif 20 cintré en fer à cheval et un bossage 21, visible sur la figure 3, prévu pour recevoir un thermostat de régulation de la température de la semelle 10.

Le corps chauffant 2 comporte une paroi périphérique 22 qui délimite latéralement un espace comprenant une chambre de vaporisation 3 principale et une chambre de survapeur 4, de type à vaporisation instantanée, comportant un fond présentant une multitude de plots pyramidaux permettant d'augmenter la surface d'échange thermique.

La chambre de vaporisation 3 est disposée au centre du corps chauffant 2 et est reliée aux trous de sortie de vapeur de la semelle 10 par un circuit de distribution de vapeur comprenant deux canaux latéraux 30 s'étendant de part et d'autre de la chambre de vaporisation 3 et se rejoignant à l'extrémité avant et à l'extrémité arrière du corps chauffant 2, les canaux latéraux 30 comportant classiquement des orifices 31 traversant le corps chauffant 2 pour déboucher sur la face inférieure du corps chauffant, au niveau de cavités de distribution de vapeur 33, visibles sur la figure 2, disposées en regard des trous de sortie de vapeur 10A de la semelle.

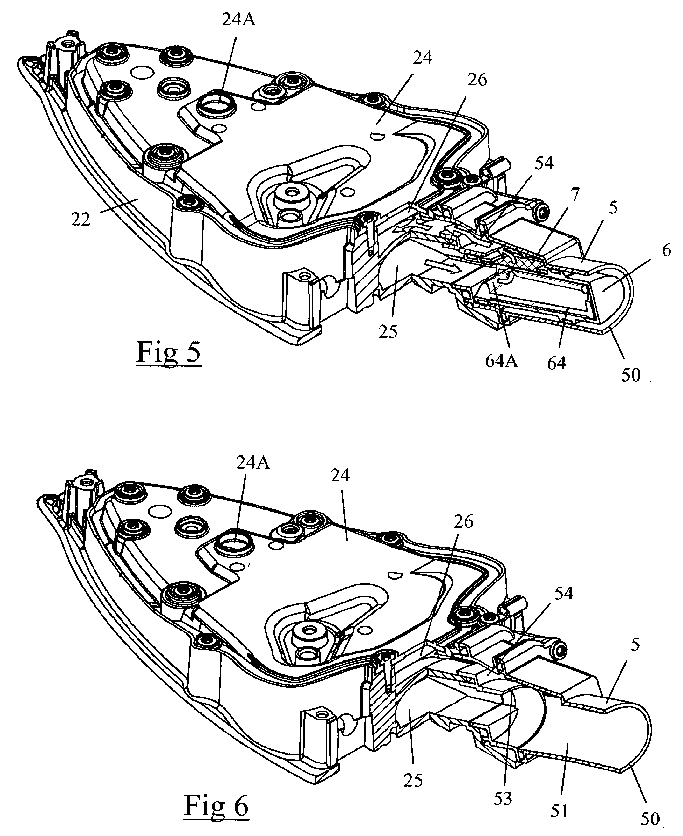

Conformément aux figures 2 et 5, le corps chauffant 2 comporte également une plaque de fermeture 24 qui vient reposer sur le bord supérieur de la paroi périphérique 22, cette plaque de fermeture 24 étant surmontée d'un réservoir d'eau, non représenté sur les figures, intégré dans le boitier du fer à repasser, alimentant en eau la chambre de vaporisation 3 par un orifice 24A de la plaque de fermeture 24 recevant, de manière connue en soi, un boisseau goutte-à-goutte, non représenté sur les figures, permettant la production d'un débit de vapeur en continu de l'ordre de 40 à 70 gr/min.

La chambre de vaporisation 3 principale est délimitée latéralement par une cloison 23 remontant jusqu'à la plaque de fermeture 24, en étant liée de manière étanche avec cette dernière, de sorte que la vapeur produite dans la chambre de vaporisation 3 ne peut s'échapper que par une ouverture 23A ménagée dans la cloison 23 au niveau de l'extrémité arrière de la chambre de vaporisation 3.

Comme on peut le voir sur la figure 2, l'ouverture 23A de la cloison débouche sur un conduit 25, de section transversale sensiblement oblongue, réalisé dans la fonderie du corps chauffant 2, ce conduit 25 s'étendant obliquement par rapport au plan de la semelle 10, en faisant un angle de l'ordre de 20°, et étant prolongé par un collecteur 5 en matière plastique, par exemple du type PPS (Polysulfure de phénylène), intégré dans le boitier du fer à repasser 1.

Le collecteur 5 comprend une cavité 51 de récupération du tartre s'étendant axialement dans le prolongement du conduit 25 et débouchant sur le talon 12 du fer à repasser au niveau de l'orifice d'évacuation du tartre 50 fermé par le bouchon 13, la cavité 51 se trouvant en porte à faux derrière la semelle 10 lorsque le fer à repasser repose sur sa semelle 10 et présentant une section transversale oblongue.

Comme on peut le voir sur les figures 2 et 6, le collecteur 5 comporte une ouverture d'échappement 53 dans la partie supérieure de la cavité 51 de récupération du tartre, cette ouverture d'échappement 53 débouchant dans un canal de retour 54 s'étendant au-dessus du conduit 25 et débouchant dans une chambre de répartition 26 disposée à l'entrée des deux canaux latéraux 30.

Conformément aux figures 5 et 7, la cavité 51 de récupération du tartre reçoit un récipient 6 récupérateur de tartre amovible présentant une forme complémentaire de la cavité 51 de récupération du tartre, le récipient 6 récupérateur de tartre pouvant être extrait ou introduit dans la cavité 51 par l'orifice d'évacuation du tartre 50. Le récipient 6 comporte une extrémité avant 60 ouverte par laquelle le flux de vapeur émis par la chambre de vaporisation 3 est admis dans le récipient 6 et une extrémité arrière fermée avantageusement fixée au bouchon 13, ainsi que cela est illustré sur la figure 7, le récipient 6 comprenant une partie inférieure munie d'une cuillère 64 de rétention du tartre comportant une partie creuse dans laquelle les particules de tartre sont stockées, l'extrémité avant de la cuillère présentant une marche 64A permettant d'éviter que le tartre récupéré dans la cuillère 64 ne retourne par gravité dans la chambre de vaporisation lorsque le fer à repasser 1 est disposé sur sa semelle 10.

Le récipient 6 est préférentiellement réalisé en matériau plastique, du type polyamide PA 6-6 renforcé de fibre de verre à 30%, et supporte un premier et un second joints 61, 62 en silicone venant au contact de la paroi intérieure de la cavité 51 de récupération du tartre, le récipient 6 comportant, entre les deux joints 61, 62, une ouverture ménagée dans la moitié supérieure du récipient 6 formant une fenêtre 63 latérale venant en regard de l'ouverture d'échappement 53 de la cavité 51 de récupération du tartre lorsque le récipient 6 est intégralement introduit dans la cavité 51.

Conformément à la figure 7, le récipient 6 récupérateur de tartre comporte un filtre 7 constitué par une grille de filtration bombée s'étendant au travers de la fenêtre 63, cette grille 7 de filtration étant fixée en bordure de la fenêtre et étant avantageusement recouverte d'un revêtement anti-adhérent en PTFE (polytétrafluoroéthylène). De manière préférentielle, le récipient 6 récupérateur de tartre est surmoulé en bordure de la grille 7 de filtration de manière à assurer une parfaite fixation de la grille 7 sur le récipient 6.

La grille 7 de filtration présente des ouvertures calibrées pour retenir les particules de tartre les plus grosses et possède une taille adaptée pour offrir une section de passage suffisante pour le débit de vapeur requis. A titre d'exemple, la grille 7 pourra comporter des ouvertures carrées de moins de 0.4 mm de côté, et préférentiellement comprises entre 0.1 mm et 0.4 mm, la surface de la grille étant au minimum de 8 cm² pour des ouvertures carrées de 0.2 mm et un débit de vapeur prévu de l'ordre de 40 à 50 gr/min. La grille 7 sera avantageusement réalisée en fil d'inox de 0,1 mm de diamètre ou en tissu de verre réalisé à partir d'un fil tressé de 1 mm de diamètre.

De manière préférentielle, la fenêtre 63 recevant la grille 7 est disposée en retrait par rapport à l'extrémité avant 60 ouverte de manière à ce que la grille 7 se trouve suffisamment éloignée de la chambre de vaporisation 3 pour que l'eau en ébullition dans la chambre de vaporisation 3 ne vienne pas, par projection, souiller la grille 7 de filtration. De plus, la disposition de la grille 7 en hauteur sur le récipient 6, lorsque le fer à repasser repose sur sa semelle 10, permet d'éviter son souillage par de l'eau pouvant parvenir dans la cavité 51 à la suite d'une vaporisation incomplète de l'eau injectée dans la chambre de vaporisation 3 lors d'une séance de repassage.

L'éloignement de la grille 7 de filtration par rapport à la chambre de vaporisation 3, ainsi que l'utilisation de matériaux plastiques pour le collecteur 5 et le récipient 6, présentent également l'avantage de permettre l'obtention d'une température relativement faible dans l'environnement de la grille 7, autour de 100°C, évitant ainsi une vaporisation forte de l'eau pouvant parvenir dans la zone du récipient 6 située sous la grille 7.

De manière préférentielle, la fenêtre 63 est également éloignée de l'extrémité arrière du récipient 6 de telle sorte qu'il résulte un volume de stockage de l'ordre de 4 à 5 cm³ dans la partie du récipient 6 située entre le fond du récipient 6 et la grille 7, dans lequel les particules de tartre tombent lorsque le fer à repasser 1 est placé verticalement sur son talon 12.

L'écoulement du flux de vapeur dans le fer à repasser 1 ainsi réalisé va maintenant être décrit.

Lorsque l'eau issue du boisseau goutte à goutte parvient au contact du fond de la chambre de vaporisation 3, elle se vaporise instantanément, ce qui provoque le dégagement d'un flux de vapeur, illustré par des flèches sur les figures 2 à 5, qui s'échappe par l'ouverture 23A de la cloison 23 puis s'écoule successivement, au travers du conduit 25 de sortie, du récipient 6, de la grille 7, du canal de retour 54 et des canaux latéraux 30, le flux de vapeur traversant ensuite les orifices 31 pour déboucher sur la face inférieure de la semelle 10 et s'échapper par les trous de sortie 10A de la semelle.

L'évaporation de l'eau crée la formation d'une couche de carbonate de calcium dans le fond de la chambre de vaporisation 3 qui se désagrège progressivement en petites particules de tartre sous l'effet notamment de la dilatation du corps chauffant 2 lors des phases de refroidissement entre deux séances de repassage.

Les particules de tartre présentent dans la chambre de vaporisation 3 se trouvent emmenées progressivement par le flux de vapeur dans le conduit 25 et se trouvent pour partie envoyées, de part leur inertie, dans le fond du récipient 6 récupérateur de tartre où elles se trouvent piégées de sorte qu'elles tombent par gravité dans la cuillère 64 et pour partie envoyée vers la grille 7. Cette séparation inertielle des particules de tartre s'effectue notamment grâce au virage de l'ordre de 90° qu'effectue le flux de vapeur à l'entrée de la grille 7.

Le déplacement des particules de tartre vers le récipient 6 s'effectue également par gravité à chaque fois que le fer à repasser 1 est placé sur son talon 12, le volume de stockage ménagé dans le fond du récipient 6 étant adapté pour recevoir les particules de tartre, accompagnées d'éventuelles gouttes d'eau, sans que ces dernières ne viennent au contact de la grille 7, évitant ainsi le souillage de la grille 7.

Les particules de tartre qui sont emportées par le flux de vapeur vers la grille 7, et qui possèdent une taille supérieure à la taille des ouvertures de la grille 7, sont quant à elles piégées sous la grille 7, seules les particules de tartre les plus fines, pratiquement invisibles à l'oeil, pouvant passer au travers de la grille 7 et s'échapper par les trous de sortie de vapeur de la semelle 10.

Lors de l'arrêt de la vapeur, la plupart des particules piégées par la grille 7 retombent par gravité dans la cuillère 64 du récipient 6, quelques particules pouvant toutefois rester collées sur la grille 7 et contribuer au colmatage progressif cette dernière, la grille 7 s'entartrant également du fait de l'évaporation des éventuelles gouttelettes d'eau parvenant au contact de la grille 7.

Lorsqu'un nettoyage du fer à repasser 1 est nécessaire, c'est-à-dire après plusieurs séances de repassage à la vapeur, ou lorsqu'un témoin d'alerte est activé sur le fer à repasser, l'utilisateur peut aisément extraire la majeure partie du tartre présent dans le fer à repasser en plaçant le fer à repasser 1 horizontalement sur sa semelle 10, de manière à accéder facilement au bouchon 13, et en extrayant le récipient 6 récupérateur de la cavité 51 en déverrouillant le bouchon 13 et en le déplaçant vers l'arrière de manière à faire coulisser axialement le récipient 6 au travers de l'orifice d'évacuation du tartre 50.

Lors de cette extraction du récipient 6, le tartre est conservé dans la cuillère 64 grâce à la forme creuse de cette dernière et à la présence de la marche 64A à proximité de l'extrémité avant de la cuillère.

Le contenu du récipient 6 peut ensuite être vidé et le récipient 6 peut être passé sous l'eau du robinet pour son nettoyage. Lors de cette opération d'évacuation du tartre, l'utilisateur a un accès visuel direct sur l'état de la grille 7 de filtration de sorte qu'il se rend compte immédiatement de son état de propreté. S'il le juge nécessaire, il peut effectuer un nettoyage de la grille 7 en la frottant sous l'eau avec une brosse ou en la plongeant dans un liquide détartrant.

Le fer à repasser ainsi réalisé présente donc l'avantage d'assurer une très bonne filtration des particules de tartre, grâce à la présence de la grille de filtration, permettant d'éviter tout rejet visible de particules de tartre sur le linge. De plus, le fer à repasser permet une évacuation aisée de particules de tartre récupérées à l'aide du récipient récupérateur de tartre de sorte qu'il peut être très facilement maintenu dans un état de propreté propice à un fonctionnement optimal du fer à repasser.

En particulier, le fer à repasser ainsi réalisé présente l'avantage de permettre à l'utilisateur d'avoir un contrôle visuel direct de l'état d'encrassement de la grille de filtration lors de l'extraction du récipient récolteur de tartre de sorte que l'utilisateur peut juger immédiatement, lorsqu'il effectue une telle opération, s'il est nécessaire de nettoyer la grille de filtration.

Bien entendu, l'invention n'est nullement limitée au mode de réalisation précédemment décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation de l'invention non représentée, le récipient récupérateur de tartre pourra ne pas être fixé sur le bouchon mais comporter à son extrémité postérieure une poignée lui permettant d'être saisi manuellement par l'utilisateur après le retrait du bouchon.

Ainsi, dans une autre variante de réalisation non représentée, la grille de filtration pourra être montée de manière amovible sur le récipient récupérateur de tartre de sorte que la grille de filtration puisse être changée en cas de besoin.

Ainsi dans une variante de réalisation non représentée, le fer à repasser pourra comporter différents filtres successifs avec des mailles de filtration de plus en plus fines. Au moins une partie de ces filtres, et avantageusement les filtres avec les mailles le plus fines, sera disposée sur le récipient récupérateur de tartre afin de permettre un nettoyage aisé des filtres s'encrassant le plus rapidement. Toutefois, le fer à repasser pourra également comporter des filtres additionnels, non amovibles, à l'intérieur du fer à repasser, en aval des filtres amovibles.

Ainsi, dans une variante de réalisation non représentée, la chambre de vaporisation pourra être découplée thermiquement de la semelle, cette dernière pouvant comporter son propre élément chauffant.

## Revendications

1. Appareil de repassage (1) comportant un générateur de vapeur (3) relié à des trous de sortie de vapeur (10A) par un circuit de distribution de vapeur ledit circuit de distribution de vapeur comportant une cavité (51) de récupération du tartre comprenant un orifice d'évacuation du tartre (50) fermé par un bouchon (13) amovible accessible depuis l'extérieur de l'appareil **caractérisé en ce que** ledit circuit de distribution de vapeur comprend au moins un filtre (7) destiné à retenir des particules de tartre transportées par le flux de vapeur amovible de l'appareil par l'orifice d'évacuation du tartre (50).

2. Appareil de repassage (1) selon la revendication 1, **caractérisé en ce que** le filtre (7) est solidaire du bouchon (13).

3. Appareil de repassage selon l'une quelconque des revendications 1 à 2, **caractérisé en ce que** le filtre (7) est constitué par une grille avec des ouvertures inférieures à 0,4 mm de côté.

4. Appareil de repassage (1) selon l'une quelconque des revendications 1 à 3, **caractérisé en ce que** le flux de vapeur cheminant dans le circuit de distribution de vapeur s'écoule de bas en haut au travers du filtre (7) et **en ce que** la cavité (51) de récupération du tartre est disposée juste en amont du filtre (7).

5. Appareil de repassage (1) selon l'une quelconque des revendications 1 à 4, **caractérisé en ce que** le filtre (7) est disposé dans une partie du circuit de distribution de vapeur au niveau de laquelle le flux de vapeur effectue un virage d'au moins 90°.

6. Appareil de repassage (1) selon l'une quelconque des revendications 1 à 5, **caractérisé en ce que** le filtre (7) présente une forme bombée.

7. Appareil de repassage (1) selon l'une quelconque des revendications 1 à 6, **caractérisé en ce qu'**il comporte un récipient (6) récupérateur de tartre s'introduisant dans la cavité (51) de récupération du tartre par l'orifice d'évacuation du tartre (50).

8. Appareil de repassage (1) selon la revendication 7, **caractérisé en ce que** le récipient (6) récupérateur de tartre présente une extrémité avant (60) ouverte par laquelle pénètre le flux de vapeur et une extrémité postérieure fermée, le récipient (6) comportant une fenêtre (63) latérale par laquelle le flux de vapeur s'échappe en direction des trous de sortie de vapeur (10A) et **en ce que** ledit filtre (7) s'étend au travers de ladite fenêtre (63).

9. Appareil de repassage (1) selon la revendication 8, **caractérisé en ce que** le récipient (6) récupérateur de tartre supporte un joint d'étanchéité (61, 62) venant au contact de la cavité (51) de récupération du tartre de part et d'autre de la fenêtre (63).

10. Appareil de repassage (1) selon l'une quelconque des revendications 8 à 9, **caractérisé en ce que** la fenêtre (63) est orientée vers le haut lorsque le récipient (6) récupérateur de tartre est disposé dans la cavité (51) de récupération du tartre et que l'appareil occupe une position de fonctionnement normal, le récipient (6) récupérateur de tartre comportant sur la paroi opposée à la fenêtre (63), une cuillère (64) comprenant une partie creuse.

11. Appareil de repassage (1) selon l'une quelconque des revendications 8 à 10, **caractérisé en ce que** le récipient (6) comporte au moins une partie, s'étendant derrière le filtre (7), définissant un volume de stockage, avantageusement supérieur à 4 cm³.

12. Appareil de repassage (1) selon l'une quelconque des revendications 1 à 11, **caractérisé en ce que** le générateur de vapeur est une chambre de vaporisation (3) instantanée.

13. Appareil de repassage (1) selon la revendication 12, **caractérisé en ce que** les trous de sortie de vapeur (10A) sont ménagés dans une semelle (10) de repassage d'un fer à repasser comportant un talon (12) sur lequel il peut reposer lors des phases inactives de repassage.

14. Appareil de repassage (1) selon la revendication 13, **caractérisé en ce que** la chambre vaporisation instantanée est reliée à la cavité (51) de récupération du tartre par une ouverture (23A) ménagée au niveau de l'extrémité arrière de la chambre de vaporisation (3), le flux de vapeur produit par la chambre de vaporisation (3) s'échappant au travers du circuit de distribution de vapeur par ladite ouverture (23A).

15. Appareil de repassage (1) selon l'une quelconque des revendications 13 à 14, **caractérisé en ce que** l'orifice d'évacuation du tartre (50) débouche au niveau du talon (12) du fer à repasser (1).

16. Appareil de repassage (1) selon l'une quelconque des revendications 13 à 15, **caractérisé en ce que** la cavité (51) de récupération du tartre se trouve en porte à faux derrière la semelle (10) lorsque le fer à repasser repose sur sa semelle (10).

## Patentansprüche

1. Bügeleisen (1) mit einem Dampfgenerator (3), der über eine Dampfverteilung mit Dampfaustrittslöchern (10A) verbunden ist, wobei diese Dampfverteilung einen Hohlraum (51) zum Sammeln von Kalkablagerungen mit einer Entkalkungsöffnung (50) aufweist, die mit einem abnehmbaren Deckel (13) verschlossen ist, der von der Außenseite des Bügeleisens zugänglich ist, **dadurch gekennzeichnet, dass** diese Dampfverteilung mindestens einen Filter (7) umfasst, der die im Dampf enthaltenen Kalkpartikel zurückhalten soll und über die Entkalkungsöffnung (50) aus dem Bügeleisen entnommen werden kann.

2. Bügeleisen (1) nach Anspruch 1, **dadurch gekennzeichnet, dass** der Filter (7) fest mit dem Deckel (13) verbunden ist.

3. Bügeleisen nach einem der Ansprüche 1 bis 2, **dadurch gekennzeichnet, dass** der Filter (7) aus einem Gitter mit Öffnungen mit einer Seitenlänge von weniger als 0,4 mm besteht.

4. Bügeleisen (1) nach einem der Ansprüche 1 bis 3, **dadurch gekennzeichnet, dass** der Dampf in der Dampfverteilung von unten nach oben durch den Filter (7) strömt und sich der Hohlraum (51) zum Sammeln von Kalkablagerungen direkt vor dem Filter (7) befindet.

5. Bügeleisen (1) nach einem der Ansprüche 1 bis 4, **dadurch gekennzeichnet, dass** der Filter (7) in einem Bereich der Dampfverteilung angeordnet ist, in dem der Dampffluss eine Kurve von mindestens 90° beschreibt.

6. Bügeleisen (1) nach einem der Ansprüche 1 bis 5, **dadurch gekennzeichnet, dass** der Filter (7) eine gewölbte Form hat.

7. Bügeleisen (1) nach einem der Ansprüche 1 bis 6, **dadurch gekennzeichnet, dass** es über einen Behälter (6) zum Sammeln von Kalkablagerungen verfügt, der über die Entkalkungsöffnung (50) in den Hohlraum (51) zum Sammeln von Kalkablagerungen hineinreicht.

8. Bügeleisen (1) nach Anspruch 7, **dadurch gekennzeichnet, dass** der Behälter (6) zum Sammeln von Kalkablagerungen ein vorderes offenes Ende (60), durch das der Dampf einströmt, und ein hinteres geschlossenes Ende aufweist, wobei der Behälter (6) über eine seitliche Öffnung (63) verfügt, über die der Dampf in Richtung der Dampfaustrittslöcher (10A) entweicht, und wobei der vorgenannte Filter (7) in diese Öffnung (63) hineinreicht.

9. Bügeleisen (1) nach Anspruch 8, **dadurch gekennzeichnet, dass** der Behälter (6) zum Sammeln von Kalkablagerungen eine Dichtung (61, 62) trägt, die auf dem Hohlraum (51) zum Sammeln von Kalkablagerungen beiderseits der Öffnung (63) aufliegt.

10. Bügeleisen (1) nach einem der Ansprüche 8 bis 9, **dadurch gekennzeichnet, dass** die Öffnung (63) nach oben zeigt, wenn der Behälter (6) zum Sammeln von Kalkablagerungen in den Hohlraum (51) zum Sammeln von Kalkablagerungen eingesetzt ist und wenn sich das Bügeleisen in einer normalen Betriebsposition befindet, wobei der Behälter (6) zum Sammeln von Kalkablagerungen über einen an der gegenüber der Öffnung (63) liegenden Wand befindlichen Löffel (64) mit einem hohlen Bereich verfügt.

11. Bügeleisen (1) nach einem der Ansprüche 8 bis 10, **dadurch gekennzeichnet, dass** der Behälter (6) mindestens einen hinter dem Filter (7) liegenden Teil umfasst, der vorzugsweise ein Speichervolumen von mehr als 4 cm³ aufweist.

12. Bügeleisen (1) nach einem der Ansprüche 1 bis 11, **dadurch gekennzeichnet, dass** es sich bei dem Dampfgenerator um eine Kammer (3) zur Sofortverdampfung handelt.

13. Bügeleisen (1) nach Anspruch 12, **dadurch gekennzeichnet, dass** die Dampfaustrittslöcher (10A) in die Sohle (10) des Bügeleisens eingelassen sind, das über eine Standfläche (12) verfügt, auf der es während der Bügelpausen abgestellt werden kann.

14. Bügeleisen (1) nach Anspruch 13, **dadurch gekennzeichnet, dass** die Kammer zur Sofortverdampfung über eine Öffnung (23A) am hinteren Ende der Dampfkammer (3) mit dem Hohlraum (51) zum Sammeln von Kalkablagerungen verbunden ist, wobei der von der Dampfkammer erzeugte Dampf über diese Öffnung (23A) in die Dampfverteilung strömt.

15. Bügeleisen (1) nach einem der Ansprüche 13 bis 14, **dadurch gekennzeichnet, dass** die Entkalkungsöffnung (50) in den Bereich der Standfläche (12) des Bügeleisens (1) mündet.

16. Bügeleisen (1) nach einem der Ansprüche 13 bis 15, **dadurch gekennzeichnet, dass** sich der Hohlraum (51) zum Sammeln von Kalkablagerungen überstehend hinter der Sohle (10) befindet, wenn das Bügeleisen auf seiner Sohle (10) ruht.

## Claims

1. Ironing appliance (1) comprising a steam generator (3) connected to steam outlet holes (10A) by a steam distribution circuit, said steam distribution circuit comprising a scale recovery cavity (51) comprising a scale evacuation hole (50) closed by a removable plug (13) accessed from outside the appliance, **characterised in that** said steam distribution circuit comprises at least one filter (7) designed to trap scale particles carried by the flow of steam, that can be taken out from the appliance through the scale evacuation hole (50).

2. Ironing appliance (1) according to claim 1, **characterised in that** the filter (7) is attached to the plug (13).

3. Ironing appliance according to claim 1 or 2, **characterised in that** the filter (7) consists of a mesh with openings of side less than 0.4 mm.

4. Ironing appliance (1) according to any one of claims 1 to 3, **characterised in that** the steam flow through the steam distribution circuit flows upwards through the filter (7), and **in that** the scale recovery cavity (51) is arranged just before the filter (7).

5. Ironing appliance (1) according to any one of claims 1 to 4, **characterised in that** the filter (7) is arranged in a part of the steam distribution circuit where the stream flow is deviated by at least 90°.

6. Ironing appliance (1) according to any one of claims 1 to 5, **characterised in that** the filter (7) has a convex shape.

7. Ironing appliance (1) according to any one of claims 1 to 6, **characterised in that** it comprises a scale recovery container (6) inserted into the scale recovery cavity (51) through the scale evacuation hole (50).

8. Ironing appliance (1) according to claim 7, **characterised in that** the scale recovery container (6) has an open front end (60) through which the steam flow enters and a closed rear end, the container (6) having a side window (63) through which the steam flow escapes towards the steam outlet holes (10A) and **in that** said filter (7) extends through said window (63).

9. Ironing appliance (1) according to claim 8, **characterised in that** the scale recovery container (6) supports a seal (61, 62) in contact with the scale recovery cavity (51) each side of the window (63).

10. Ironing appliance (1) according to claim 8 or 9, **characterised in that** the window (63) is directed upwards when the scale recovery container (6) is arranged in the scale recovery cavity (51) and the appliance occupies a normal operating position, the scale recovery container (6) having on the wall opposite to the window (63), a spoon (64) comprising a hollow section.

11. Ironing appliance (1) according to any one of claims 8 to 10, **characterised in that** the container (6) comprises at least one part extending behind the filter (7) defining a storage volume, advantageously greater than 4 cm³.

12. Ironing appliance (1) according to any one of claims 1 to 11, **characterised in that** the steam generator is an instantaneous vaporisation chamber (3).

13. Ironing appliance (1) according to claim 12, **characterised in that** the steam outlet holes (10A) are formed in an ironing sole (10) of an iron having a heel (12) on which it can rest during inactive phases of ironing.

14. Ironing appliance (1) according to claim 13, **characterised in that** the instantaneous vaporisation chamber is connected to the scale recovery cavity (51) by an opening (23A) formed at the rear end of the vaporisation chamber (3), the steam flow produced by the vaporisation chamber (3) escaping through the steam distribution circuit through said opening (23A).

15. Ironing appliance (1) according to claim 13 or 14, **characterised in that** the scale evacuation hole (50) opens out at the heel (12) of the iron (1).

16. Ironing appliance (1) according to any one of claims 13 to 15, **characterised in that** the scale recovery cavity (51) overhangs the back of the sole (10) when the iron rests on its sole (10).
